# FASCICULE DE BREVET EUROPEEN

(11) **EP 3 241 259 B1**
(45) Date de publication et mention de la délivrance du brevet: **11.11.2020**
(21) Numéro de dépôt: 15823717.2
(22) Date de dépôt: 24.12.2015
(51) Int. Cl.: H01S 3/00, G02F 1/11, G02F 1/39, H01S 3/067, H01S 3/11, H01S 3/08, H01S 3/16, G02F 1/35

(54) **SYSTÈME ET PROCÉDÉ DE GÉNÉRATION D'IMPULSIONS LUMINEUSES ULTRABRÈVES À FORTE DENSITÉ SPECTRALE DE PUISSANCE ET ACCORDABLES EN LONGUEUR D'ONDE**
SYSTEM UND VERFAHREN ZUR ERZEUGUNG WELLENLÄNGENABSTIMMBARER, ULTRAKURZER LICHTPULSE MIT HOHER LEISTUNGSSPEKTRALDICHTE
SYSTEM AND METHOD FOR GENERATING WAVELENGTH-TUNABLE, ULTRA-SHORT LIGHT PULSES HAVING HIGH POWER SPECTRAL DENSITY

(30) Priorité: 29.12.2014 FR 1463399
(43) Date de publication de la demande: 08.11.2017
(73) Titulaire: Université de Bordeaux, 33000 Bordeaux (FR); Centre National de la Recherche Scientifique, 75016 Paris (FR)
(72) Inventeur: CORMIER, Eric, 33610 Cestas (FR); LHERMITE, Jérome, 64600 Anglet (FR); ROYON, Romain, 40100 Dax (FR); SARGER, Laurent, 33400 Talence (FR)
(74) Mandataire: Jacobacci Coralis Harle
(86) Numéro de dépôt international: PCT/FR2015/053751
(87) Numéro de publication internationale: WO 2016/108020

(56) Documents cités:
- US-A- 5 812 567
- US-A1- 2005 226 278
- ROYON ROMAIN ET AL: "MW peak power infrared source for tunable visible light generation by Four-Wave Mixing", 2014 CONFERENCE ON LASERS AND ELECTRO-OPTICS (CLEO) - LASER SCIENCE TO PHOTONIC APPLICATIONS, THE OPTICAL SOCIETY, 8 juin 2014 (2014-06-08), pages 1-2, XP032707083,
- ROYON ROMAIN ET AL: "fs Mode-locked fiber laser continuously tunable from 976 nm to 1070 nm", 2013 CONFERENCE ON LASERS & ELECTRO-OPTICS EUROPE & INTERNATIONAL QUANTUM ELECTRONICS CONFERENCE CLEO EUROPE/IQEC, IEEE, 12 mai 2013 (2013-05-12), page 1, XP032588916, DOI: 10.1109/CLEOE-IQEC.2013.6801336
- GUY M J ET AL: "A duration-tunable, multiwavelength pulse source for OTDM and WDM communications systems", IEEE PHOTONICS TECHNOLOGY LETTERS, IEEE SERVICE CENTER, PISCATAWAY, NJ, US, vol. 9, no. 7, juillet 1997 (1997-07), pages 1017-1019, XP011425383, ISSN: 1041-1135, DOI: 10.1109/68.593385

## Description

### DOMAINE TECHNIQUE AUQUEL SE RAPPORTE L'INVENTION

La présente invention se rapporte de manière générale aux lasers. Plus précisément, l'invention se rapporte à un système selon la revendication 1 et un procédé selon la revendication 11 de génération d'impulsions lumineuses de durée picoseconde (ps) ou sub-picoseconde (sub-ps) accordable en longueur d'onde.

En particulier, l'invention se rapporte à un système et procédé de génération d'impulsions ps ou sub-ps continument accordable dans le domaine de longueurs d'onde du visible, du proche infrarouge et/ou de l'infrarouge moyen.

Dans le présent document, on entend par impulsion ultra-brève une impulsion de durée de l'ordre de la picoseconde, comprise entre 0.1 ps et environ 200 ps. On entend par impulsion brève une impulsion de durée de l'ordre de la nanoseconde ou sub-nanoseconde, comprise entre environ 200 ps et 100 ns.

Dans le présent document, on considère que le domaine spectral du rayonnement électro-magnétique s'étend dans le visible de 400 à 800 nm, l'ultraviolet de 300 à 400 nm, le proche infrarouge de 800 nm à 1,5 micron, l'infrarouge moyen de 1,5 à 10 microns et l'infrarouge lointain de 10 à 20 microns.

### ARRIERE-PLAN TECHNOLOGIQUE

Les lasers trouvent aujourd'hui des applications extrêmement variées. Plus particulièrement, en bio-imagerie et en médecine, on choisit parmi les sources laser disponibles, la source la mieux adaptée en fonction des besoins particuliers d'une application précise. Le domaine de fonctionnement d'une source laser est défini par un ensemble de paramètres spécifiques comprenant notamment la gamme de longueur d'onde accessible, le régime temporel et le niveau d'énergie et/ou de puissance délivrée.

Selon le type de laser utilisé, la gamme de longueur d'onde d'un laser peut être située dans l'ultra-violet, le visible ou l'infrarouge. Le régime temporel d'un laser peut être continu ou à impulsions, les impulsions pouvant être de durée nanoseconde, picoseconde ou femtoseconde. L'énergie et la puissance délivrées par un laser peuvent aussi varier de plusieurs ordres de grandeur selon le type de laser.

Dans une plateforme d'imagerie ou un cabinet médical, pour réaliser différentes applications, il est actuellement nécessaire de disposer de plusieurs sources laser ayant chacune un domaine de fonctionnement propre, chaque source laser étant dédiée à une application spécifique.

Par exemple, on utilise un laser à colorant émettant à une longueur d'onde dans le rouge (∼environ 800 nm) en mode continu. Un laser néodyme-YAG (Nd-YAG) fonctionne en mode pulsé ou continu dans le proche infrarouge (∼1µm). Un laser Nd-YAG doublé en fréquence dans un cristal de KTP opère en mode pulsé ou continu pour une émission à une longueur d'onde dans le vert (0,5 µm) et un laser erbium-YAG (Er-YAG) pour une émission dans l'infrarouge à 3 µm.

Toutefois, l'accroissement du nombre de sources laser se traduit par une augmentation du coût d'investissement et de fonctionnement, ainsi que de la complexité de la mise en œuvre et de la maintenance. La multiplicité et la diversité de sources laser spécifiques constitue un frein majeur à leur diffusion plus large.

De plus, même dans un centre médical ou d'imagerie bien équipé, la gamme des traitements reste en général limitée, notamment par le choix réduit dans les longueurs d'onde accessibles. Ainsi, en dermatologie, suivant la carnation du patient, il faut pouvoir utiliser une longueur d'onde bien définie. Il est donc particulièrement souhaitable de développer une source laser unique capable de générer du rayonnement laser ayant un domaine de fonctionnement, et en particulier une longueur d'onde ajustable pour être le plus efficace vis-à-vis d'une pathologie particulière.

D'autre part, afin d'augmenter la puissance des impulsions, sans augmenter le dépôt de chaleur, il est souhaitable d'utiliser des impulsions de durée de plus en plus courte. Plus précisément, il est souhaitable de passer du régime d'impulsions nanoseconde ou sub-nanoseconde, c'est-à-dire d'au moins plusieurs centaines de picosecondes, à un régime d'impulsions picosecondes.

Il existe des lasers à colorant accordables en longueur d'onde, qui permettent de générer un faisceau laser de puissance de 1 mW à 10W. Cependant, l'accordabilité en longueur d'onde d'un laser à colorant repose sur l'utilisation de différents colorants en phase liquide. Un inconvénient est que chaque colorant a une durée de vie limitée. De plus, les lasers à colorant imposent des contraintes de maintenance sévères. Cette voie à été depuis longtemps abandonnée et les seuls lasers à colorant encore sur le marché ont une gamme de longueur d'onde très réduite, la plupart du temps mono-couleur.

On connaît aussi des systèmes laser basés sur la combinaison d'une source laser proche infrarouge et d'un cristal optique non-linéaire pour produire, par génération de seconde harmonique, un rayonnement visible accordable sur une gamme de 40 nm dans le bleu (entre 450 et 490 nm) et sur une gamme de 60 nm dans le vert (entre 500 et 560 nm), avec des durées d'impulsion de 0.1 ps à 100 ns.

D'autres sources de lumière, de type oscillateur paramétrique optique ou OPO, sont basées sur un composant optique non-linéaire solide placé dans une cavité optique. Dans des conditions particulières d'accord de phase, à partir d'une onde de pompe, un OPO génère une onde de signal et une onde complémentaire (idler), la somme des fréquences optiques de l'onde signal et de l'onde complémentaire étant égale à la fréquence optique de l'onde de pompe. L'accordabilité en longueur d'onde d'un OPO est obtenue en modifiant l'orientation et/ou la température du composant optique non-linéaire. Néanmoins, les sources OPO n'ont donné lieu à aucun développement industriel.

ROYON ROMAIN ET AL: "MW peak power infrared source for tunable visible light génération by Four-Wave Mixing",2014 CONFERENCE ON LASERS AND ELECTRO-OPTICS (CLEO) - LASER SCIENCE TO PHOTONIC APPLICATIONS, THE OPTICAL SOCIETY, 8 juin 2014, pages 1-2, décrit un système de génération d'impulsions lumineuses ultrabrèves accordables en longueur d'onde dans un domaine spectral compris entre l'ultraviolet et l'infrarouge, ledit système comprenant un module d'injection comprenant une source lumineuse supercontinuum et un filtre spectral accordable en longueur d'onde ("Acousto-Optic Tunable Filter" AOTF) disposé sur un trajet optique en aval de la source supercontinuum, deux amplificateurs à fibre optique étant disposé en série en sortie du module d'injection.

US A 5 812 567 ou ROYON ROMAIN ET AL: "fs Mode-locked fiber laser continuously tunable from 976 nm to 1070 nm",2013 CONFERENCE ON LASERS & ELECTRO-OPTICS EUROPE & INTERNATIONAL QUANTUM ELECTRONICS CONFERENCE CLEO EUROPE/IQEC, IEEE, 12 mai 2013, page 1, décrit un laser à verrouillage de mode comprenant un miroir à boucle non linéaire amplificateur avec amplificateur optique et filtre spectral accordable disposé sur le trajet optique du miroir à boucle non linéaire.

### OBJET DE L'INVENTION

Il existe donc un besoin pour un système et une méthode permettant de réaliser un système de génération d'impulsions lumineuses de forte puissance et/ou de forte énergie, accordable en longueur d'onde sur un large domaine spectral dans le domaine du visible à l'infrarouge moyen.

De préférence, il est souhaitable que le système de génération d'impulsions lumineuses soit fibré en sortie.

Un des buts de l'invention est de proposer un système de génération d'impulsions lumineuses ultrabrèves continument accordable en longueur d'onde sur un large domaine spectral.

La présente invention a pour but de remédier aux inconvénients des systèmes antérieurs et concerne plus particulièrement un système de génération d'impulsions lumineuses ultrabrèves accordables en longueur d'onde dans un domaine spectral compris entre l'ultraviolet et l'infrarouge.

Selon l'invention, le système comprend un module d'injection comprenant une source lumineuse et un filtre spectral accordable en longueur d'onde, la source lumineuse étant adaptée pour générer des impulsions lumineuses brèves, de durée comprise entre plusieurs centaines de picosecondes et une centaine de nanosecondes, lesdites impulsions lumineuses brèves s'étendant sur une bande spectrale d'émission dans le domaine proche-infrarouge, la bande spectrale d'émission ayant une largeur spectrale de plusieurs dizaines de nanomètres à plusieurs centaines de nanomètres, le filtre spectral ayant au moins une bande passante spectrale définie par une largeur spectrale comprise entre 10 pm et 10 nm, de préférence de 250 pm à 1 nm, et une longueur d'onde centrale, ladite bande passante spectrale étant accordable dans une gamme spectrale [Lambda1 ; Lambda2] comprise à l'intérieur de la bande spectrale d'émission de la source, le filtre spectral étant adapté pour filtrer spectralement et pour mettre en forme temporellement lesdites impulsions lumineuses brèves, de manière à ce que le module d'injection génère des impulsions lumineuses ultrabrèves, de durée de l'ordre de la nanoseconde, la femtoseconde ou la picoseconde, et de préférence de l'ordre de la picoseconde, filtrées spectralement et accordables en longueur d'onde en fonction de la longueur d'onde centrale de ladite bande passante spectrale; et au moins un amplificateur optique disposé en sortie du module d'injection, ledit au moins un amplificateur optique étant adapté pour recevoir lesdites impulsions lumineuses ultrabrèves filtrées spectralement et accordables en longueur d'onde et pour générer par amplification optique des impulsions amplifiées ultrabrèves filtrées spectralement et accordables en longueur d'onde en fonction de la longueur d'onde centrale de ladite bande passante spectrale du filtre spectral.

L'invention permet de générer des impulsions à la fois ultrabrèves (de 1ps à environ 20 ps), filtrées spectralement avec une largeur spectrale comprise entre quelques centaines de pm et quelques nm, et accordables en longueur d'onde sur une large gamme spectrale, par exemple sur une gamme spectrale d'au moins 50nm à 300 nm de large, par exemple dans le domaine proche infrarouge, la longueur d'onde centrale étant d'environ 1 micron. Ainsi, le module d'injection est accordable en longueur d'onde sur la gamme spectrale [Lambda1 ; Lambda2] du filtre tout en générant des impulsions ultrabrèves et de faible largeur spectrale.

Ce module d'injection permet d'injecter des impulsions dans différents amplificateurs optiques, et ainsi d'obtenir des impulsions amplifiées ultrabrèves et accordables en longueur d'onde sur une large gamme spectrale, chaque impulsion ayant une faible largeur spectrale (de l'ordre du nanomètre). Ces impulsions amplifiées présentent ainsi une forte densité spectrale de puissance.

On définit ici la densité spectrale de puissance comme le rapport entre la puissance d'une impulsion et la largeur spectrale de cette impulsion.

Le système de génération d'impulsion n'utilise pas de compresseur d'impulsions, mais simplement une source à large bande spectrale combinée à un filtre ayant une bande passante accordable en longueur d'onde et un amplificateur optique.

L'accord en longueur d'onde des impulsions amplifiées est très facile à commander par l'accord en longueur d'onde du filtre.

Dans un premier exemple qui ne fait pas partie de l'invention la source lumineuse comprend une source supercontinuum et le filtre spectral est disposé sur un trajet optique en aval de la source supercontinuum.

Selon l'invention, a source lumineuse comprend un miroir à boucle non linéaire amplificateur, le miroir à boucle non linéaire amplificateur comprenant un autre amplificateur optique disposé sur le trajet optique du miroir à boucle non linéaire et le filtre spectral étant disposé sur le trajet optique du miroir à boucle non linéaire.

Dans un mode de réalisation de l'invention le miroir à boucle non linéaire amplificateur est en forme de 8 et comprend une première boucle non linéaire amplificatrice bidirectionnelle et une deuxième boucle non-linéaire unidirectionnelle, le filtre spectral étant disposé dans la première boucle non-linéaire.

De façon avantageuse, le filtre spectral comprend un filtre à base de prisme, un filtre à base de réseau de diffraction, un filtre interférentiel, un filtre biréfringent, un filtre diffractif à miroir de Bragg, un filtre diffractif à miroir résonnant, un filtre acousto-optique ou un filtre acousto-optique en couches minces.

Selon un aspect particulier, le filtre spectral est un filtre interférentiel ou un filtre acousto-optique configuré pour filtrer simultanément une pluralité de bandes passantes spectrales espacées spectralement les unes des autres, chaque bande passante spectrale étant définie par une longueur d'onde centrale et une largeur spectrale comprise entre 10 pm et 10 nm, et chaque longueur d'onde centrale du filtre spectral étant accordable dans une gamme spectrale comprise à l'intérieur de la bande spectrale d'émission de la source lumineuse.

De préférence, le filtre spectral a une largeur spectrale inférieure à 1 nm.

Selon un aspect particulier et avantageux de l'invention, ledit au moins un amplificateur optique comprend une pluralité d'amplificateurs optiques disposés en étoile autour du module d'injection.

Selon un autre aspect particulier et avantageux de l'invention, ledit au moins un amplificateur optique comprend un préamplificateur à fibre optique et un amplificateur à fibre optique de puissance disposés en série.

Selon un mode de réalisation particulier et avantageux, la source lumineuse, le filtre spectral et/ou le au moins un amplificateur optique comprennent des composants à fibre optique.

Selon un autre aspect particulier et avantageux de l'invention, ledit au moins un amplificateur optique comprend une fibre optique dopée terre rare.

Dans un mode de réalisation de l'invention, le système de génération d'impulsions lumineuses ultrabrèves comprend en outre un composant optique dispersif à dispersion négative disposé en sortie du au moins un amplificateur optique, le composant optique dispersif étant adapté pour recevoir simultanément une impulsion pompe et une impulsion amplifiée ultrabrève et pour générer, par effet optique non-linéaire de mélange à quatre ondes, un premier signal optique et un second signal optique, le premier ou le second signal optique comprenant une impulsion lumineuse de sortie de durée de l'ordre de la picoseconde à la centaine de picosecondes à une longueur d'onde prédéterminée dans le domaine ultraviolet, visible ou infrarouge et ayant une largeur spectrale inférieure à 10 nm, la longueur d'onde prédéterminée de l'impulsion lumineuse de sortie étant accordable en fonction de la longueur d'onde centrale du filtre spectral.

Selon un aspect particulier et avantageux de ce mode de réalisation, le composant optique dispersif comprend une section de fibre optique photonique.

L'invention concerne aussi un procédé de génération d'impulsions lumineuses ultrabrèves accordables en longueur d'onde comprenant les étapes suivantes :
- génération d'impulsions lumineuses brèves, de faible puissance, de durée comprise entre plusieurs centaines de picosecondes et une centaine de nanosecondes, lesdites impulsions lumineuses brèves s'étendant sur une bande spectrale d'émission ayant une largeur spectrale de plusieurs dizaines de nanomètres à plusieurs centaines de nanomètres, de préférence lesdites impulsions lumineuses brèves étant chirpées linéairement ;
- filtrage spectral desdites impulsions brèves à une longueur d'onde comprise dans une bande passante spectrale définie par une longueur d'onde centrale Lambda3 et une largeur spectrale Δlambda3 comprise entre 10 pm et 10 nm , la longueur d'onde centrale (Lambda3) de ladite bande passante spectrale du filtrage spectral étant accordable à l'intérieur d'une gamme spectrale ([Lambda1 ; Lambda2]) comprise à l'intérieur de ladite bande spectrale d'émission, le filtrage spectral étant adapté pour filtrer spectralement et pour mettre en forme temporellement lesdites impulsions lumineuses brèves, de préférence chirpées linéairement, de manière à générer des impulsions lumineuses ultrabrèves de durée de l'ordre de la picoseconde, filtrées spectralement et accordables en longueur d'onde en fonction de la longueur d'onde centrale de ladite bande passante spectrale, et
- amplification optique desdites impulsions ultrabrèves filtrées spectralement pour générer des impulsions amplifiées ultrabrèves filtrées spectralement et accordables en longueur d'onde en fonction de la longueur d'onde centrale de la bande passante spectrale du filtrage spectral.

Selon un aspect particulier et avantageux le procédé de génération d'impulsions lumineuses ultrabrèves accordables en longueur d'onde, comprend en outre l'étape suivante :
- génération, à partir d'une impulsion pompe et d'une impulsion amplifiée ultrabrève, par effet optique non-linéaire de mélange à quatre ondes dans un composant optique dispersif à dispersion négative, d'un premier signal optique et d'un second signal optique, le premier ou le second signal optique comprenant une impulsion lumineuse ultrabrève de sortie, de durée de l'ordre de la picoseconde à la centaine de picosecondes et à une longueur d'onde prédéterminée dans le domaine ultraviolet, visible ou infrarouge avec une largeur spectrale inférieure à 10 nm, la longueur d'onde prédéterminée de l'impulsion lumineuse ultrabrève de sortie étant accordable en fonction de la longueur d'onde centrale (Lambda3) de ladite bande passante spectrale du filtrage spectral.

L'invention trouvera une application particulièrement avantageuse dans les systèmes de génération d'impulsions lumineuses pour application à l'imagerie en bio-imagerie et/ou en médecine.

L'invention permet avantageusement de fournir un système de génération d'impulsions lumineuses ultrabrèves et accordables en longueur d'onde sur une large gamme spectrale. Dans un mode de réalisation particulier, le système laser permet de générer des impulsions de longueur d'onde continument accordable dans le domaine du visible de 550 nm à 750 nm ou 850 nm et/ou dans le domaine infrarouge de 1,3 à 3 microns.

Cette description donnée à titre d'exemple non limitatif fera mieux comprendre comment l'invention peut être réalisée en référence aux dessins annexés sur lesquels :
- la figure 1 représente schématiquement l'architecture générale d'un système de génération d'impulsions lumineuses ultrabrèves accordables en longueur d'onde selon l'invention ;
- la figure 2 représente schématiquement un module d'injection suivant un exemple qui ne fait pas partie de l'invention basé sur une source supercontinuum ;
- la figure 3 représente schématiquement un module d'injection suivant un mode de réalisation basé sur un miroir à boucle non linéaire (NOLM) ou miroir à boucle non linéaire amplificateur (NALM) ;
- la figure 4 représente schématiquement un module de préamplification ;
- la figure 5 représente schématiquement un module amplificateur de puissance ;
- la figure 6 représente schématiquement un système de génération d'impulsions lumineuses ultrabrèves accordables en longueur d'onde combiné à un module convertisseur de fréquence par mélange à quatre ondes ;
- la figure 7 illustre un exemple d'un système de génération d'impulsions lumineuses ultrabrèves accordables qui ne fait pas partie de l'invention, basé sur un module d'injection à source supercontinuum couplé à un module convertisseur de fréquence par mélange à quatre ondes à base de composants fibrés ;
- la figure 8 représente schématiquement un système de génération d'impulsions lumineuses ultrabrèves accordables en longueur d'onde dans lequel un module d'injection commun est couplé à différents amplificateurs optiques adaptés à différentes gammes de longueurs d'onde ;
- les figures 9 à 11 illustrent des mesures de profil spectral et temporel d'impulsions lumineuses ultrabrèves accordables en longueur d'onde en sortie d'un module d'injection basé sur une source supercontinuum, respectivement pour différentes largeurs spectrales du filtre accordable.

### DESCRIPTION DETAILLEE D'UN EXEMPLE DE REALISATION

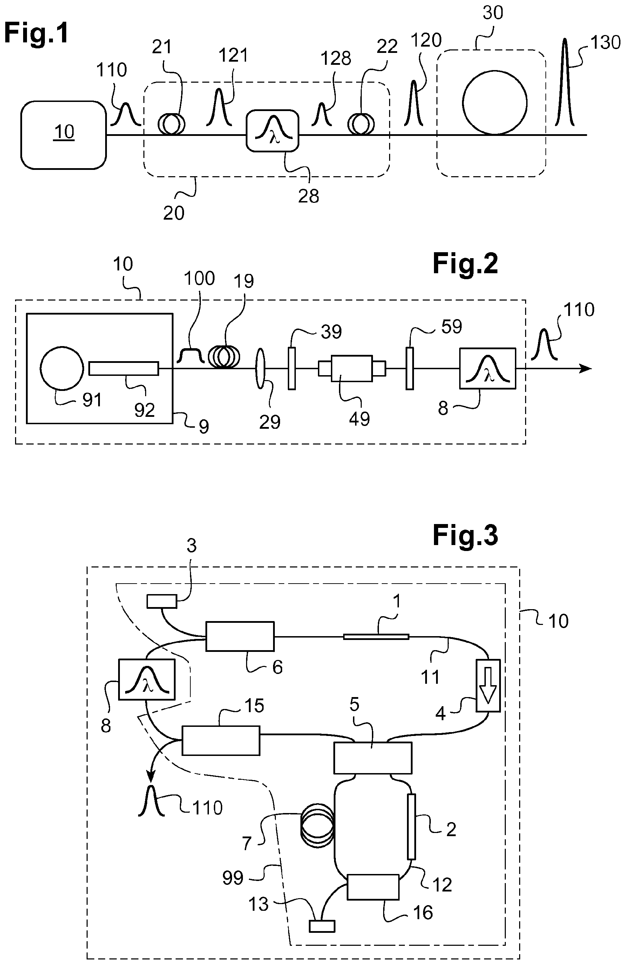

La figure 1 représente schématiquement l'architecture générale d'un système de génération d'impulsions lumineuses ultrabrèves accordables en longueur d'onde. Ce système repose sur la combinaison de différents modules.

De manière simplifiée, le système de génération d'impulsions lumineuses ultrabrèves accordables en longueur d'onde comporte un module d'injection 10, un module de préamplification 20 et un module d'amplification de puissance 30.

Le module d'injection 10, le module de préamplification 20 et le module d'amplification de puissance 30 sont disposés en série.

Le module de préamplification 20 comporte par exemple un premier préamplificateur optique 21 disposé en série avec un second préamplificateur optique 22, et séparés par un filtre spectral 28 de préférence passe bande.

Comme détaillé ci-dessous en lien avec les figures 2 et 3, le module d'injection 10 génère des impulsions lumineuses ultrabrèves 110 de durée de l'ordre de la picoseconde, filtrées spectralement sur une bande passante étroite comprise entre quelques centaines de picomètre et quelques nanomètres et accordables en longueur d'onde.

Ces impulsions lumineuses ultrabrèves 110 peuvent ensuite être amplifiées, pour former des impulsions lumineuses amplifiées 120, 130 accordables en longueur d'onde et de forte densité spectrale de puissance.

A titre d'exemple illustratif, le module de préamplification 20 reçoit les impulsions lumineuses ultrabrèves 110. Le premier préamplificateur optique 21 génère des impulsions lumineuses préamplifiées 121. Le composant optique 28 reçoit les impulsions lumineuses préamplifiées 121 et génère des impulsions lumineuses filtrées 128. Le second préamplificateur optique 22 reçoit les impulsions lumineuses 128 et génère des impulsions lumineuses préamplifiées 120.

L'amplificateur optique de puissance 30 reçoit les impulsions lumineuses préamplifiées 120 et génère des impulsions lumineuses amplifiées 130. Ces impulsions lumineuses amplifiées 130 sont ultrabrèves, de durée comprise entre 0.1 et 30 picosecondes, filtrées spectralement sur une bande passante étroite (entre 250 pm et 1.5 nm) et accordables en longueur d'onde en fonction de la longueur d'onde du module d'injection 10.

Les impulsions lumineuses amplifiées 120, 130 peuvent aussi être converties en fréquence de manière à générer des impulsions lumineuses 140, 141 accordables en longueur d'onde dans d'autres domaines de longueur d'onde que le domaine spectral du module d'injection.

On obtient ainsi un système de génération d'impulsions lumineuses ultrabrèves accordables en longueur d'onde sur un très vaste domaine de longueurs d'onde et à forte densité spectrale de puissance.

Nous allons maintenant décrire de manière plus détaillée les différents modules du système de la figure 1 et en particulier le module d'injection 10.

### Module d'injection à source supercontinuum

Dans un premier exemple qui ne fait pas partie de l'invention, décrit en lien avec la figure 2, le module d'injection 10 est basé sur la combinaison d'une source lumineuse de type supercontinuum 9 et d'un filtre spectral 8 accordable.

Il existe des sources supercontinuum disponibles dans le commerce.

Une source supercontinuum 9 comporte en général une source laser 91 et un composant optique dispersif 92, ayant une dispersion anomale ou de préférence normale. La source laser 91 émet un rayonnement pulsé, les impulsions source ayant une durée de 800 ps, à une seule longueur d'onde déterminée, par exemple de 1064 nm, avec une largeur spectrale de 0.06 nm. On utilise un composant optique dispersif 92 par exemple à fibre optique, et de façon plus particulière basé sur une fibre optique photonique ou une fibre microstructurée. Le composant optique dispersif 92 élargit spectralement le rayonnement laser pour former un rayonnement type supercontinuum (SC) s'étendant continument sur une large bande spectrale. Les processus à l'origine de la formation d'un rayonnement supercontinuum dans une fibre photonique ou microstructurée sont notamment l'automodulation de phase, l'effet Raman et/ou encore le mélange à quatre ondes. Ces processus physiques sont complexes et varient selon la longueur de la fibre, la durée d'impulsion de la pompe, et la longueur d'onde de pompe par rapport une longueur d'onde où la dispersion est nulle, aussi appelé zéro de dispersion. Le choix de ces paramètres et du composant optique dispersif 92 détermine la largeur spectrale et la forme spectrale du rayonnement supercontinuum.

En pratique, il est préférable de pomper optiquement le composant optique dispersif 92 à une longueur d'onde proche d'une longueur d'onde au zéro de dispersion (ZDW pour Zero Dispersion Wavelength) de ce composant optique dispersif 92, car plus la dispersion est élevée et moins les effets non-linéaires sont importants. Dans un exemple, on choisit une fibre microstructurée 92 ayant une longueur d'onde du zéro de dispersion inférieure à 1064 nm (par exemple de 1060 nm) qui est pompée optiquement par une diode de pompe ayant une longueur d'onde de pompe de 1064 nm. Dans un autre exemple, la longueur d'onde du zéro de dispersion de la fibre microstructurée 92 est de 1300 nm et la longueur d'onde de pompe est de 1550 nm.

Préférentiellement, on utilise un composant optique dispersif 92. La fibre produit intrinsèquement des impulsions lumineuses 100 chirpées linéairement. On entend par impulsions chirpées des impulsions lumineuses étirées temporellement, et par impulsions chirpées linéairement des impulsions ayant une fréquence instantanée qui varie linéairement en fonction du temps.

D'autre part, le fonctionnement de la source supercontinuum 9 en régime impulsionnel est obtenu en contrôlant une pompe du laser 91. La source supercontinuum 9 délivre ainsi des impulsions brèves 100, ayant une durée comprise entre 0.1ps et 100ps, faiblement énergétiques, ayant une énergie par pulse de l'ordre de 10 nJ à 1 microjoule, selon la durée des impulsions, et qui s'étendent sur une large bande spectrale. Par exemple, les impulsions brèves 100 ont une durée comprise entre 800 ps et 100 ns et un spectre qui va de 400 à 2000 nm.

Dans un exemple, un laser 9 génère un rayonnement supercontinuum pulsé avec des impulsions brèves 100 ayant une durée d'environ dix nanosecondes (10 ns) et une fréquence de répétition comprise entre 10 kHz et 100 MHz. La longueur d'onde de ce laser 9 varie en fonction de la fibre optique dispersive 92 utilisée (de type simple gaine, double gaine, LMA ou PCF) dont le diamètre de cœur est compris entre de 2 µm et 10 µm. En fonction du zéro de dispersion de la fibre optique dispersive 92, nous pouvons générer des impulsions brèves 100 étendues spectralement sur une centaine de nanomètres à plusieurs centaines de nanomètres, par exemple de 600 nm à 900 nm ou de 976 nm à 1100 nm ou de1400 nm à 1600 nm ou encore de 1800 à 2100 nm.

Le spectre du rayonnement supercontinuum ainsi généré peut s'étendre dans une gamme spectrale allant de l'ultraviolet (longueur d'onde de 300 nm) jusqu'à l'infrarouge (longueur d'onde de 10 µm).

Pour des raisons d'efficacité de conversion, on limite de préférence la bande spectrale du module d'injection 10 basé sur une source supercontinuum, de manière à ce que le spectre d'émission s'étende sur une centaine de nanomètres, par exemple de 980 nm à 1100 nm. En effet, l'émission de la source supercontinuum en dehors de cette bande spectrale n'est pas utilisée dans le reste du système.

De façon avantageuse, la source supercontinuum 9 est couplée à une fibre optique 19 de sortie. Un système optique 39, par exemple à lentille met en forme spatialement les impulsions brèves 100 émises par la source supercontinuum 9 en sortie de la fibre optique 19. Un isolateur optique 49, disposé entre deux lames demi-onde 39, 59 est disposé entre la source supercontinuum 9 et un filtre spectral 8 accordable en longueur d'onde.

Le filtre spectral 8 est un filtre optique ayant au moins une bande passante spectrale accordable en longueur d'onde sur une large bande spectrale dans l'infrarouge.

De façon particulièrement avantageuse, le filtre spectral 8 est accordable en longueur d'onde sur une large gamme spectrale à l'intérieur de la bande spectrale de la source supercontinuum 9. Plus précisément, la longueur d'onde centrale du filtre spectral 8 est accordable en longueur d'onde sur une gamme spectrale d'au moins une centaine de nanomètres, et éventuellement de plusieurs centaines de nanomètres. Lors de l'accord en longueur d'onde du filtre spectral, la largeur de bande du filtre spectral reste en général constante.

De préférence, la largeur de bande du filtre spectral 8 est limitée, par exemple inférieure à 3 nm, de préférence inférieure à 1 nm, ou de 500 pm, ou de 250 pm.

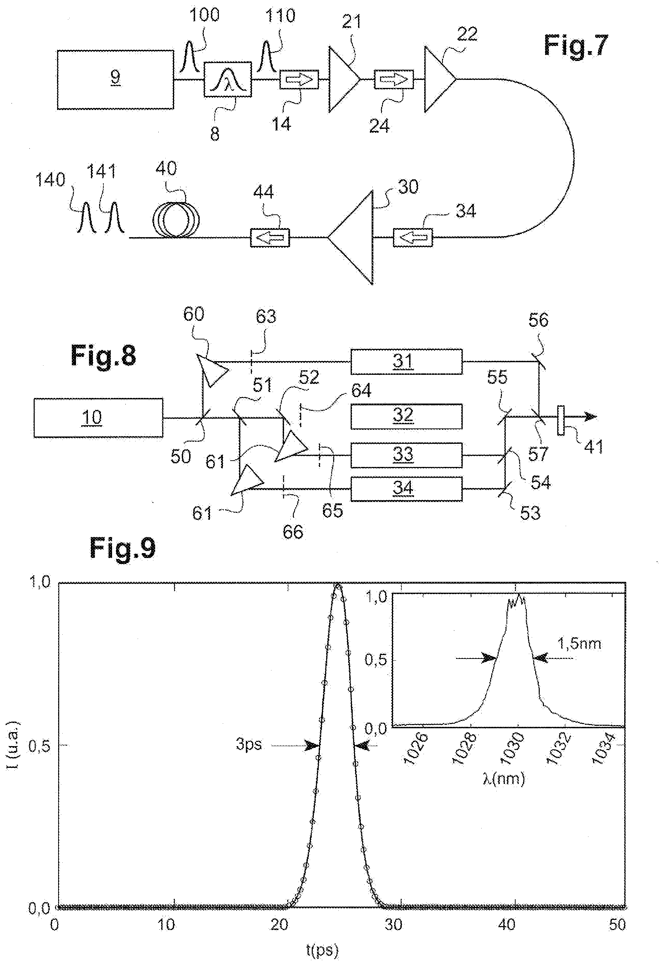

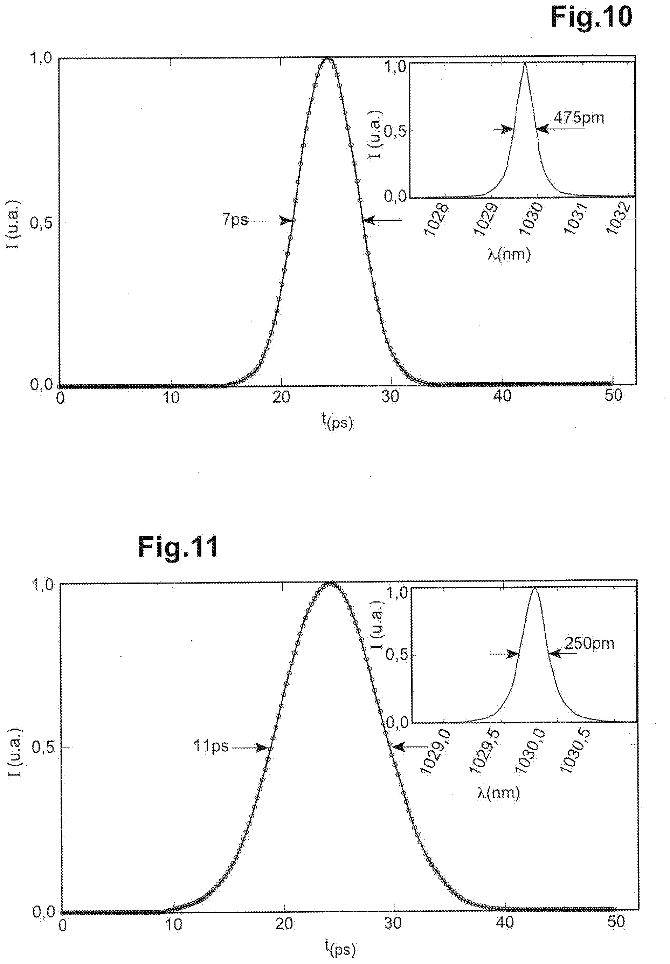

Dans les exemples de résultats illustrés sur les figures 9 à 11, le filtre spectral a une largeur spectrale respectivement de 1.5 nm (Fig. 9), 475 pm (Fig. 10) ou 250 pm (Fig. 11).

De manière générale, le filtre spectral 8 peut être passif ou actif. Dans le cas d'un filtre passif, la sélection spectrale est fixe. Dans le cas d'un filtre actif, le pic de transmission peut être décalé en agissant sur un paramètre de commande extérieur tel que le déplacement ou la rotation d'un composant, le changement de température ou la tension appliquée. Un filtre spectral passif permet ainsi de filtrer une longueur d'onde unique. Un filtre spectral actif permet d'accorder la longueur d'onde, continument ou par saut, sur plusieurs centaines de nanomètres compris dans la gamme d'émission du supercontinuum.

Plus précisément, les filtres spectraux que l'on peut insérer dans le module d'injection peuvent être classés en différentes catégories.

La première catégorie regroupe les filtres spatiaux qui fournissent une dispersion spatiale en fonction de la longueur d'onde ou de la fréquence optique. Parmi ces filtres, les filtres à base de prisme ou de réseau de diffraction fournissent une dispersion angulaire en fonction de la fréquence optique qui permet de sélectionner la longueur d'onde utile.

La deuxième catégorie concerne les filtres interférentiels. Un filtre interférentiel a une transmission maximale pour des fréquences optiques qui engendrent des interférences constructives. Le principe est alors d'utiliser l'interaction à deux ondes (étalon Fabry-Perot) ou à ondes multiples (miroirs multicouches) pour créer des effets de modulation de la transmission ou de la réflectivité du composant. Ces filtres interférentiels utilisent des réflexions multiples sur un certain nombre de surfaces. Si toutes les ondes réfléchies ou transmises sont en phase, la transmission (ou la réflexion) est maximale. L'effet d'interférence constructive étant par nature dépendant de la longueur d'onde, on obtient des variations de la transmission (ou de la réflexion) en fonction de la fréquence optique ou de la longueur d'onde.

La troisième catégorie concerne les filtres biréfringents. Un filtre biréfringent repose sur des phénomènes d'interférences par polarisation entre les ondes se propageant dans un matériau biréfringent respectivement suivant l'axe ordinaire et l'axe extraordinaire de ce matériau biréfringent. Le principe du filtrage spectral consiste à utiliser l'indice extraordinaire qui dépend de la direction de propagation par rapport à l'axe optique dans un milieu biréfringent.

Enfin, une autre catégorie de filtre spectral diffractif se situe entre les filtres spatiaux et les filtres interférentiels. Un filtre diffractif utilise les interférences à ondes multiples généralement grâce à une variation périodique de l'indice du matériau massif. Dans cette catégorie, se trouvent les miroirs de Bragg et les filtres acousto-optiques. On peut également citer les miroirs résonnants, combinant un réseau de diffraction avec un miroir diélectrique. Ces filtres diffractifs présentent de multiples possibilités de réglage pour discriminer la longueur d'onde de sortie.

Selon un aspect particulièrement avantageux, certains filtres peuvent être configurés pour générer simultanément plusieurs longueurs d'onde cohérentes distinctes et accordables. Ainsi, un filtre de type interférentiel ou acousto-optique peut être utilisé à cet effet. Dans le cas d'un filtre interférentiel, les longueurs d'onde sont filtrées de manière passive par le filtre interférentiel qui laisse passer des bandes spectrales régulièrement espacées en longueur d'onde, sous la forme connue d'un peigne de raies. Dans le cas d'un filtre acousto-optique, on applique en général une onde acoustique à un cristal pour générer une longueur d'onde diffractée. L'application simultanée de plusieurs ondes acoustiques, de phases différentes, au cristal du filtre acousto-optique, permet la superposition de différentes longueurs d'onde diffractées. Selon la configuration du filtre interférentiel ou acousto-optique considéré, l'espacement entre ces différentes longueurs d'onde peut s'étendre de 0,01 nm jusqu'à 100 nm et le nombre de longueurs d'onde disponibles simultanément peut être compris entre 2 et jusqu'à 30. Ce nombre de longueurs d'onde peut être variable et être modifié par un contrôle de certains paramètres du filtre. La largeur spectrale de chaque bande spectrale est en général comprise entre 0,01 nm jusqu'à 5 nm, et de préférence de 0,1 nm. La bande d'accordabilité en longueur d'onde peut s'effectuer sur de larges bandes spectrales allant de 400 à 700 nm ou de 700 à 1200 nm ou de 1300 à 1700 ou encore de 1800 jusqu'à 2200nm.

On dispose de cette manière de plusieurs longueurs d'onde cohérentes distinctes et accordables dans un même et unique faisceau laser. On trouve des applications pour ce type de système multi-longueur d'onde notamment en spectroscopie ou en bio-imagerie.

A titre d'exemple, à l'aide d'un filtre accordable acousto-optique, on peut au moyen d'un contrôleur diffracter de une jusqu'à seize longueurs d'onde, d'une largeur spectrale de 0,6 nm et séparées d'au moins 1 nm.

De cette manière, un filtre acousto-optique a permis de filtrer simultanément des impulsions à trois longueurs d'onde distinctes égales à 1000 nm, 1030 nm et 1100 nm.

En résumé, dans le premier exemple qui ne fait pas partie de l'invention, le module d'injection 10 comporte une source supercontinuum et un filtre spectral, tels que décrits ci-dessus.

Un résultat surprenant de cet arrangement du module d'injection est que le filtre spectral 8 filtre non seulement spectralement les impulsions lumineuses sur une bande spectrale étroite (de 250 pm à 1.5 nm de largeur spectrale), mais que ce filtre spectral 8 filtre aussi temporellement les impulsions lumineuses. En sortie du module d'injection 10, on observe en effet que les impulsions lumineuses 110 ont une durée de l'ordre de la picoseconde, par exemple comprise entre 0.1ps et 100 ps, et de préférence de 20 à 50 ps, pour des impulsions 100 émises par la source supercontinuum de durée de l'ordre de la nanoseconde (entre 800ps et 100 ns). Plus précisément, on constate que la durée des impulsions lumineuses 110 est inversement proportionnelle à la largeur spectrale du filtre spectral 8. Cet effet de filtrage temporel n'est pas encore complètement expliqué. Par exemple, pour une largeur spectrale du filtre de 1,5 nm, on mesure une durée d'impulsions lumineuses de 3 ps (voir Fig. 9), respectivement pour une largeur spectrale du filtre de 475 pm, on mesure une durée d'impulsions lumineuses de 7 ps (voir Fig. 10), et respectivement pour une largeur spectrale du filtre de 250 pm, on mesure une durée d'impulsions lumineuses de 11 ps (Fig. 11).

Du fait du processus complexe de formation d'un rayonnement supercontinuum par différents effets non-linéaires, le filtrage de ce rayonnement supercontinuum entraîne la réduction de la durée d'impulsion passant d'impulsions nanosecondes à des impulsions picosecondes, la durée des impulsions 110 en sortie du filtre spectral variant inversement avec la largeur spectrale du filtre spectral 8.

On réalise ainsi un module d'injection 10 à partir d'une source supercontinuum 9, basée sur un laser 91 émettant des impulsions à une seule longueur d'onde, qui sont ensuite étendues spectralement et chirpées linéairement, puis filtrées au moyen d'un filtre spectral 8. Ce module d'injection 10 génère des impulsions lumineuses ultrabrèves 110 de durée de l'ordre de la picoseconde (de 1 à 20 ps environ), chirpées linéairement et filtrées spectralement sur une largeur de bande spectrale étroite (de 250pm à quelques nanomètres). En faisant varier la longueur d'onde centrale du filtre spectral 8 accordable en longueur d'onde, ce premier exemple de module d'injection 10 permet d'accorder la longueur d'onde des impulsions lumineuses ultrabrèves 110 sur une large bande spectrale d'au moins une centaine de nanomètres, jusqu'à plusieurs centaines de nm, de manière relativement simple et à moindre coût. Les impulsions lumineuses ultrabrèves 110 générées par le module d'injection 10 basé sur une source supercontinuum 9 et un filtre spectral 8 ont une puissance d'environ 20 microwatt à 1 milliwatt.

### Module d'injection à boucle non-linéaire

Dans un mode de réalisation, selon l'invention, décrit en lien avec la figure 3, le module d'injection 10 est basé sur un laser à verrouillage de mode accordable en longueur d'onde sur un large domaine spectral dans l'infrarouge, qui s'étend par exemple de 976 nm à 1030 nm.

Plus précisément, le module d'injection 10 est basé sur un laser à verrouillage de mode comprenant un miroir à boucle non linéaire amplificateur (aussi appelé NALM pour Non Linear Amplifying Loop Mirror).

Sur la figure 3, le module d'injection 10 comprend un miroir à boucle non linéaire amplificateur 99. Le miroir à boucle non linéaire amplificateur 99 est en forme de 8 et comprend une première boucle non-linéaire amplificatrice 11 et une seconde boucle non linéaire amplificatrice 12, reliées entre elles par un coupleur 5.

Plus précisément, la première boucle non-linéaire amplificatrice 11 comporte un premier amplificateur optique 1, par exemple une section de fibre optique dopée Ytterbium, de type monomode, de longueur 10 cm à 1 m, diamètre de cœur 6 à 10 microns, un coupleur-multiplexeur optique 6, un filtre spectral 8 accordable en longueur d'onde, un isolateur optique 4 et un coupleur de sortie 15. Une pompe 3 est injectée à l'entrée du coupleur-multiplexeur optique 6 dans la première boucle non-linéaire 11, de manière à pomper optiquement le premier amplificateur optique 1.

La seconde boucle non linéaire amplificatrice 12 comporte un second amplificateur optique 2, par exemple une section de fibre optique dopée Ytterbium, de type monomode, de longueur 10 cm à 1 m, diamètre de cœur 6 à 10 microns, un coupleur-multiplexeur optique 16 et une fibre optique passive 7, par exemple une fibre de silice ayant un diamètre du cœur de 6 à 10 microns et une longueur 10 cm à 20 m.

Une pompe 13 est injectée à l'entrée du coupleur-multiplexeur optique 16 dans la seconde boucle non linéaire amplificatrice 12, de manière à pomper optiquement le second amplificateur optique 2.

Les pompes 3, 13 sont par exemple des diodes monomodes fibrées.

On a disposé, à l'intérieur de la cavité du laser à verrouillage de mode, un filtre spectral 8. Le filtre spectral 8 est un filtre optique ayant une bande passante accordable en longueur d'onde sur un large domaine spectral dans l'infrarouge, tel que décrit en lien avec le premier exemple.

De préférence, la bande passante du filtre spectral est limitée, par exemple inférieure à 3 nm ou à 1 nm ou encore à 0.5 nm, ou encore à 250 pm.

A titre d'exemple illustratif et nullement limitatif, le filtre spectral 8 accordable en longueur d'onde comprend un filtre interférentiel, un filtre acousto-optique ou un filtre acousto-optique en couches minces. Le filtre spectral 8 peut être accordable en longueur d'onde par des moyens de contrôle électroniques et/ou mécaniques sur une large bande spectrale d'au moins une centaine de nanomètres, jusqu'à plusieurs centaines de nm.

De façon particulièrement avantageuse, le premier amplificateur optique 1 et/ou le second amplificateur optique 2 sont des amplificateurs optiques à large bande spectrale. Plus précisément, au lieu d'utiliser une fibre amplificatrice de type alumino-silicate, on sélectionne une fibre optique dopée erbium et codopée phosphore de manière à ce que la bande spectrale d'amplification de cette fibre optique s'étende sur au moins une large bande spectrale dans le proche infrarouge allant de 976 nm à 1030 nm. On entend ici par large bande spectrale, une bande spectrale s'étendant sur au moins une centaine de nanomètres et pouvant s'étendre sur plusieurs centaines de nanomètres.

De préférence, le premier amplificateur optique 1, le second amplificateur optique 2 et la fibre optique 7 présentent une dispersion normale, c'est-à-dire une dispersion négative, comprise par exemple entre de -100 à 0 ps/km/nm pour la silice.

Ainsi, un module d'injection 10 basé sur un laser à verrouillage de mode comprenant un miroir à boucle non linéaire amplificateur 99 et un filtre spectral 8 délivre des impulsions lumineuses ultrabrèves 110, de durée inférieure à environ 10 ps, chirpées linéairement, à une cadence de quelques MHz, filtrées spectralement avec une largeur spectrale de l'ordre du nanomètre et accordables en longueur d'onde entre 976 nm et 1030 nm, et ayant une puissance d'environ quelques milliwatts.

Dans une variante, le module d'injection 10 est basé sur un laser à verrouillage de mode comprenant un miroir à boucle non linéaire (aussi appelé NOLM pour Non Linear Amplifying Loop Mirror) comprenant uniquement la première boucle amplificatrice 11. Dans ce cas, le composant dispersif 7 est placé dans la boucle 11.

On a ainsi réalisé un module d'injection 10, basé sur une source supercontinuum, comme illustré sur la figure 2, ou selon l'invention sur un miroir à boucle non linéaire, comme illustré sur la figure 3. Le module d'injection 10 génère des impulsions lumineuses ultrabrèves 110, de durée inférieure à environ 10 ps, chirpées linéairement, filtrées spectralement, les impulsions ultrabrèves ayant une largeur spectrale de l'ordre du nanomètre, et accordables en longueur d'onde sur une bande spectrale de plusieurs dizaines de nanomètres, par exemple entre 976 nm et 1030 nm, au moyen du filtre spectral 8 accordable.

Le module d'injection 10 délivre des impulsions lumineuses ultrabrèves 110 de faible largeur spectrale (ayant une largeur spectrale d'environ 1 nm), qui peuvent ensuite être injectées dans un module d'amplification.

### Module de préamplification

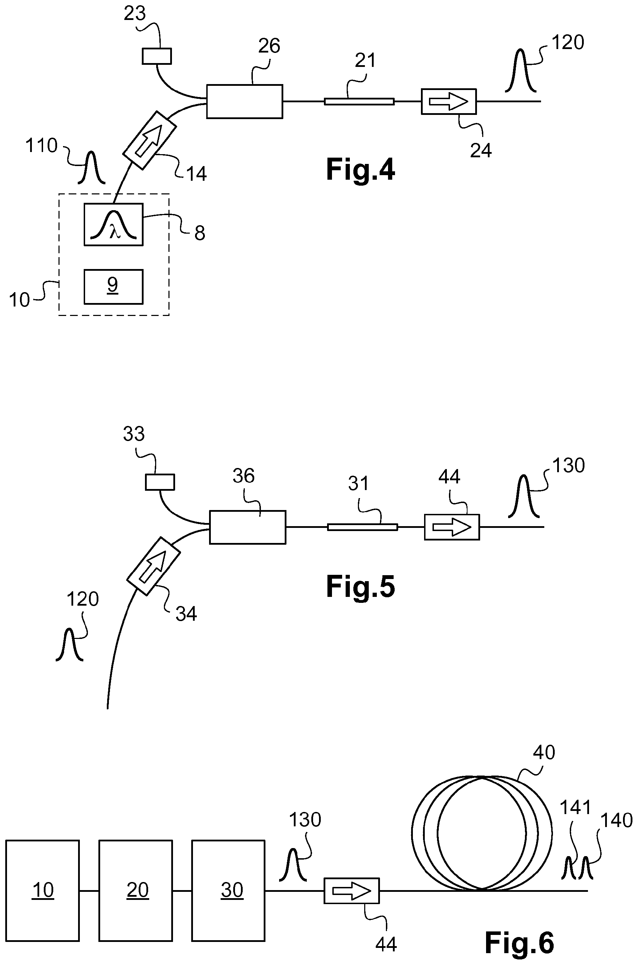

On a représenté sur la figure 4 un module de préamplification disposé en sortie d'un module d'injection 10 basé par exemple sur une source supercontinuum 9 et un filtre spectral 8, tels que décrits en lien avec la figure 2. Le module de préamplification comporte un isolateur optique 14, un coupleur multiplexeur 26, une pompe 23, un amplificateur optique 21 et un autre isolateur optique 24. Le module de préamplification reçoit les impulsions lumineuses ultrabrèves 110 du module d'injection 10 et génère, par amplification optique, des impulsions lumineuses ultrabrèves préamplifiées 120. De façon préférée, l'amplificateur optique 21 est un amplificateur à fibre optique, par exemple à fibre optique dopée terre rare.

De cette manière, un même module d'injection 10 peut injecter des impulsions lumineuses ultrabrèves vers différents amplificateurs optiques associés respectivement à des bandes d'émission différentes. Il suffit pour cela d'accorder la longueur d'onde du filtre spectral 8 du module d'injection en fonction de la bande de gain de l'amplificateur optique sélectionné.

Par exemple, on utilise un module d'amplification ayant une structure Master-Oscillator-Power-Amplifier (MOPA), par exemple tel que représenté sur la figure 1. En effet, l'architecture MOPA permet l'extraction de fortes puissances, sous certaines conditions, accordable en longueur d'onde sur une bande spectrale étendue correspondant aux différents amplificateurs optiques utilisables.

### Module d'amplification de puissance

On a représenté sur la figure 5 un module d'amplification de puissance qui peut être disposé en sortie d'un module d'injection 10 ou en sortie d'un module de préamplification. Le module d'amplification de puissance comporte un isolateur optique 34, un coupleur multiplexeur 36, une pompe 33, un amplificateur optique 31 et un autre isolateur optique 44. Le module d'amplification de puissance reçoit par exemple les impulsions lumineuses ultrabrèves préamplifiées 120 du module de préamplification et génère, par amplification optique, des impulsions lumineuses ultrabrèves amplifiées 130.

De façon préférée, l'amplificateur optique 31 est un amplificateur à fibre optique, par exemple à fibre optique dopée terre rare.

Dans un exemple de réalisation particulier, on utilise un amplificateur à fibre dopée Ytterbium permettant l'amplification à une longueur d'onde autour de 1 µm. De cette manière, on obtient une gamme d'accord en longueur d'onde de l'ordre de 100 nm (allant de 1020 nm à 1120 nm), avec des impulsions de durée variable comprise entre 3 ps et 20 ps. En pratique, la durée des impulsions est limitée par le filtre utilisé.

Un autre milieu amplificateur solide est en particulier basé sur un cristal de néodyme :YAG (Nd:YAG) pour le domaine spectral autour de 1064 µm (doublé en fréquence pour obtenir une longueur d'onde de 532 nm).

Dans d'autres domaines spectraux, on peut aussi utiliser d'autres milieux amplificateurs solides. A titre d'exemple, on peut utiliser un milieu amplificateur basé sur de la fosterite (longueur d'onde d'émission à 1200 nm, puis doublée en fréquence à 600 nm), ou d'erbium :YAG (Er:YAG) émettant autour de 3µm ou encore l'alexandrite émettant à 755 nm et doublé en fréquence à 380nm ou encore le rubis émettant à 694 et doublé en fréquence à 350 nm.

Un autre mode opératoire peut également être basé sur différents d'amplificateurs à fibre optique dopées respectivement avec différents terres rares pour couvrir différentes gammes spectrales : en particulier une fibre dopée praséodyme : émettant dans la gamme 488-900 mn et 1300nm, une fibre codopée néodyme-ytterbium émettant dans la gamme 890-940 nm et/ou 976-1200nm, une fibre dopée holmium émettant dans la gamme 2100-2200nm, une fibre dopée Erbium émettant dans la gamme 1460-1600nm et/ou encore une fibre dopée thulium émettant dans la gamme 1600-2200 nm.

Le module d'injection 10 peut délivrer des impulsions 110 à très haute cadence de 20 kHz à 50 MHz. En sortie des modules d'amplification à forte puissance moyenne, de 100 mW à 10W, sont produits des trains d'impulsions intenses et ultrabrèves à l'intérieur d'une enveloppe contrôlée par la durée et la cadence du flash de pompe de l'amplificateur.

### Modules d'amplification disposés en étoile autour d'un même module d'injection

On a représenté sur la figure 8 un système de génération d'impulsions lumineuses ultrabrèves accordables en longueur d'onde selon un autre exemple de réalisation de l'invention.

Le système comporte plusieurs amplificateurs optiques différents 31, 32, 33, 34 (basés sur des milieux solides verres ou cristaux) disposés en étoile autour d'une lampe flash dans des arrangements multi passage de façon la plus probable. Cet ensemble d'amplificateurs optiques 31, 32, 33, 34 est injecté par un module d'injection 10 unique qui est accordable en longueur d'onde et aiguillé sélectivement vers l'un ou l'autre des amplificateurs optiques 31, 32, 33, 34. Un filtrage-aiguillage peut être réalisé au moyen de prismes 60-66 ou d'éléments diffractifs adaptés et/ou de lames semi-réfléchissantes 50, 51, 52. D'autres lames semi-réfléchissantes 54, 55 et des miroirs 53, 56 permettent de recombiner les différents faisceaux amplifiés vers une même sortie. Un milieu optique non-linéaire 41 peut être inséré à la sortie du dispositif pour réaliser la conversion de fréquence requise pour la délivrance de la longueur d'onde adaptée en fonction de l'application souhaitée.

### Module convertisseur de fréquence par mélange à quatre ondes

La figure 6 représente schématiquement un autre exemple de réalisation de système de génération d'impulsions lumineuses ultrabrèves accordables en longueur d'onde. Dans ce mode de réalisation, le système de génération d'impulsions lumineuses ultrabrèves accordables en longueur d'onde comporte un module d'injection 10, un module de pré-amplification 20 et/ou un module d'amplification de puissance 30 et un module convertisseur de fréquence 40.

Le module d'injection 10, le module de pré-amplification 20, le module d'amplification de puissance 30 et le module convertisseur de fréquence 40 sont disposés en série. Un isolateur optique 44 est disposé entre le module d'amplification de puissance 30 et le module convertisseur de fréquence 40.

En sortie du ou des amplificateurs optiques 20, 30, on obtient des impulsions amplifiées 130 ultrabrèves, de durée comprise entre 1ps et 20 ps environ, accordables en longueur d'onde sur une centaine de nanomètres jusqu'à environ 300 nm et intenses de 1kW à 1 MW en puissance crête.

La structure temporelle originale de cette source laser est très favorable pour la conversion de fréquence, permettant ainsi d'étendre de façon très importante le domaine spectral accessible par le système complet.

Le module convertisseur de fréquence 40 est basé sur un composant optique non-linéaire disposé en aval du module d'amplification optique 30. Par un effet non-linéaire de mélange dégénéré à quatre ondes (DFWM pour Degenerated Four Wave Mixing), à partir de deux impulsions amplifiées provenant de la même source, le composant optique non-linéaire 40 produit un signal 140 à la fréquence double des impulsions amplifiées 130. Le composant optique non-linéaire 40 produit aussi une onde complémentaire 141 (aussi appelée *idler*)*.* En fonction de la longueur d'onde des impulsions amplifiées 130, c'est-à-dire en fonction de la longueur d'onde du filtre spectral 8, le signal 140 est émis à une longueur d'onde comprise dans le visible et pouvant aller du jaune au rouge sur une gamme spectrale de 550 à 700 nm jusque-là encore inaccessible.

Les impulsions amplifiées 130 ont une intensité suffisante pour que la conversion de fréquence par mélange à quatre ondes ait une forte efficacité.

Plus précisément, le mélange à quatre ondes (FWM pour « Four Wave Mixing ») est un processus non-linéaire associé à la génération de supercontinuum. Le mélange dégénéré à quatre ondes (DFWM pour « degenerate four-wave mixing ») apparaît lorsque deux photons de pompe identiques sont annihilés pour produire deux photons avec des longueurs d'onde différentes et la même énergie totale. Des recherches ont été intensément menées sur le processus d'accord de phase par la dispersion des fibres optiques aux longueurs d'onde des télécommunications autour de 1,5 µm.

Ce sont les fibres à cristaux photoniques (PCF) qui ont permis de fournir la dispersion nécessaire pour un pompage avec des longueurs d'onde plus courtes, autour de 1 µm et ainsi produire des longueurs d'onde autour de 660nm. Les efficacités de conversion sont de 10 à 30% pour un passage dans une fibre de type PCF ayant une longueur de l'ordre du mètre. Du fait que le FWM convertisse la pompe en une paire de longueurs d'onde discrète plutôt qu'en un large continuum, il permet de délivrer une densité spectrale de puissance bien supérieure à des longueurs d'onde spécifiques.

Alors qu'une source supercontinuum de forte puissance peut générer quelques mW/nm sur le spectre visible, le FWM est capable de délivrer une puissance supérieure à la dizaine de Watts à une longueur d'onde spécifique. Ainsi, on peut obtenir des densités spectrales de puissance très importantes, de l'ordre du W/nm, grâce à ce processus. En associant une source accordable 10, un module préamplificateur et/ou un module amplificateur et un module convertisseur de fréquence 40, il devient alors possible de générer de nouvelles longueurs d'onde sur une large bande dans le domaine spectral du visible.

La figure 7 illustre un exemple d'un système de génération d'impulsions ultrabrèves et filtrées spectralement combiné à un module convertisseur de fréquence. Le système de la figure 7 est basé essentiellement sur des composants à fibre optique. Plus précisément, le système de la figure 7 comporte une source supercontinuum 9 et un filtre spectral 8 accordable en longueur d'onde, tels que décrits en lien avec la figure 2. Le système comporte en série un premier préamplificateur optique 21, un deuxième préamplificateur optique 22, un amplificateur optique de puissance 30, et un composant optique non-linéaire 40. Le composant optique 40 est par exemple une fibre à cristaux photoniques (PCF). Des isolateurs optiques 14, 24, 34, 44 sont disposés entre les différents modules du système. Le composant optique non-linéaire 40 reçoit les impulsions lumineuses ultrabrèves, filtrées spectralement et amplifiées et génère une onde de signal 140 et une onde complémentaire 141 (aussi appelée *idler*), la somme des fréquences optiques de l'onde signal 140 et de l'onde complémentaire 141 étant égale à la fréquence optique de l'onde de pompe.

A partir d'un module d'injection 10 accordable dans le domaine proche infrarouge (entre 976 et 1030 nm), on obtient un signal comprenant des impulsions lumineuses 140 dans le domaine du visible de 510 à 620 nm et/ou un complémentaire comprenant des impulsions lumineuses 141 dans le domaine infrarouge de 1,8 à 5 microns.

Le système de génération d'impulsions illustré sur la figure 7 présente l'avantage d'être robuste et compact. Les applications de ce système sont très variées. La gamme de longueur d'onde d'émission accessible avec une telle source accordable combinée avec une puissance moyenne élevée, de 100 mW à 10 W, est particulièrement innovante et permet d'envisager des nouveaux procédés laser assistés thermiquement que ce soit dans l'imagerie ou l'usinage.

Le système de génération d'impulsions selon l'un quelconque des modes de réalisation détaillés ci-dessus est particulièrement intéressant pour des applications médicales. En effet, ce système permet de délivrer un rayonnement énergétique avec des impulsions à la fois ultrabrèves (de l'ordre de la picoseconde), ayant une faible largeur spectrale (de l'ordre de 1 nm) et une longueur d'onde centrale accordable sur un domaine spectral très étendu (de l'UV proche ∼300nnm à plusieurs microns). L'architecture du module d'injection accordable permet d'envisager de nombreuses applications médicales, particulièrement en dermatologie, où le réglage de la longueur d'onde est nécessaire à l'optimisation du traitement. Cette accordabilité en longueur d'onde sur une large gamme spectrale permet d'adapter les paramètres des impulsions lumineuses ultrabrèves délivrées en fonction des conditions opératoires, par exemple pour traiter une tache ou un défaut cutané. Différents amplificateurs optiques adaptés pour amplifier des impulsions dans différentes gammes de longueurs d'onde peuvent être assemblés autour de moyens de pompages communs (lampe flash, diodes ou autre). Ce système d'amplification est injecté par un module d'injection unique qui présente un spectre large bande. L'accordabilité de l'ensemble est basée sur le spectre extrêmement étendu de cet injecteur et la puissance moyenne sur l'utilisation de milieux amplificateurs à grand gain.

De plus, la durée ultrabrève des impulsions permet de combiner le système de génération d'impulsions avec un composant optique non linéaire de conversion de fréquence. Cette conversion de fréquence permet ainsi d'étendre de façon très importante le spectre généré par le système complet.

### Mesures d'impulsions

Les figures 9 à 11 représentent des mesures de profil spectral d'impulsions lumineuses ultrabrèves accordables en longueur d'onde, obtenues à l'aide d'un analyseur de spectre optique et respectivement des mesures de profil temporel de ces impulsions, obtenues par autocorrélateur, pour différentes largeurs spectrales du filtre accordable 8.

Sur la figure 9, on mesure des impulsions amplifiées en sortie d'un système de génération d'impulsions tel que détaillé en lien avec la figure 1.

On mesure à la fois la durée et la largeur spectrale de ces impulsions.

La largeur spectrale des impulsions est déterminée par la largeur spectrale du filtre accordable 8.

Sur les figures 9 à 11, on a représenté des mesures d'intensité d'une impulsion lumineuse en fonction du temps (petits ronds) et une courbe d'ajustement Gaussien de la forme temporelle de cette impulsion (trait plein). En insert, on a représenté une mesure de l'intensité de cette impulsion en fonction de la longueur d'onde.

Sur la figure 9, on déduit de la courbe d'ajustement Gaussien de la forme temporelle de l'impulsion que la durée de cette impulsion est égale à 3 ps. Sur la figure 9 en insert, on détermine la longueur d'onde centrale de cette impulsion qui est d'environ 1030 nm, ainsi que la largeur spectrale de cette impulsion, qui est de 1.5 nm.

En faisant seulement varier la largeur spectrale du filtre accordable et en maintenant fixe la longueur d'onde centrale de ce filtre, on effectue des mesures de manière analogue à celles de la figure 9.

Sur la figure 10, on mesure des impulsions lumineuses ayant une durée égale à 7 ps, une largeur spectrale de 475 pm et une longueur d'onde centrale d'environ 1030 nm.

De la même manière, sur la figure 11 on mesure des impulsions lumineuses ayant une durée égale à 11 ps, une largeur spectrale de 250 pm et une longueur d'onde centrale d'environ 1030 nm.

Le système permet ainsi de générer des impulsions ayant à la fois une durée ultrabrève (d'environ 1 picoseconde à 11ps) et une largeur spectrale très étroite respectivement de 1.5 nm, 475 pm et 250 pm, à une longueur d'onde centrale d'environ 1030 nm.

Le système permet de générer des impulsions laser ultrabrèves de durée picoseconde, de très faible largeur spectrale. Ces impulsions sont accordables en longueur d'onde sur une gamme de plusieurs dizaines à centaines de nanomètres. Ces impulsions peuvent être amplifiées si bien qu'on obtient des impulsions picoseconde à très forte densité spectrale de puissance accordables en longueur d'onde sur un large domaine spectral de l'ultraviolet (300 nm) à l'infrarouge (jusqu'à 10 microns).

## Revendications

1. Système de génération d'impulsions lumineuses ultrabrèves accordables en longueur d'onde dans un domaine spectral compris entre l'ultraviolet et l'infrarouge, **caractérisé en ce que** ledit système comprend :
- un module d'injection (10) comprenant une source lumineuse (9, 99) et un filtre spectral (8) accordable en longueur d'onde,
- la source lumineuse (9, 99) étant adaptée pour générer des impulsions lumineuses brèves (100) de durée comprise entre plusieurs centaines de picosecondes et une centaine de nanosecondes, lesdites impulsions lumineuses brèves (100) s'étendant sur une bande spectrale d'émission ayant une largeur spectrale de plusieurs dizaines de nanomètres à plusieurs centaines de nanomètres,
- le filtre spectral (8) ayant au moins une bande passante spectrale définie par une longueur d'onde centrale et une largeur spectrale comprise entre 10 pm et 10 nm et la longueur d'onde centrale de ladite bande passante spectrale étant accordable dans une gamme spectrale comprise à l'intérieur de la bande spectrale d'émission de la source lumineuse (9, 99), le filtre spectral (8) étant adapté pour filtrer spectralement et pour mettre en forme temporellement lesdites impulsions lumineuses brèves (100), de manière à ce que le module d'injection (10) génère des impulsions lumineuses ultrabrèves (110) de durée de l'ordre de la picoseconde, filtrées spectralement et accordables en longueur d'onde en fonction de la longueur d'onde centrale de ladite bande passante spectrale ; et
- au moins un amplificateur optique (20,21,22,30,31,32,33,34) disposé en sortie du module d'injection (10), ledit au moins un amplificateur optique étant adapté pour recevoir lesdites impulsions lumineuses ultrabrèves (110) filtrées spectralement et accordables en longueur d'onde et pour générer par amplification optique des impulsions amplifiées ultrabrèves (120, 130) filtrées spectralement et accordables en longueur d'onde en fonction de la longueur d'onde centrale de ladite bande passante spectrale du filtre spectral (8)
- la source lumineuse (9, 99) comprenant un miroir à boucle non linéaire amplificateur (99), le miroir à boucle non linéaire amplificateur (19) comprenant un autre amplificateur optique (1) disposé sur le trajet optique du miroir à boucle non linéaire et le filtre spectral (8) étant disposé sur le trajet optique du miroir à boucle non linéaire (99).

2. Système de génération d'impulsions lumineuses ultrabrèves selon la revendication 1 dans lequel le miroir à boucle non linéaire amplificateur (99) est en forme de 8 et comprend une première boucle non linéaire amplificatrice bidirectionnelle (11) et une deuxième boucle non-linéaire unidirectionnelle (12), le filtre spectral (8) étant disposé dans la première boucle non-linéaire (11).

3. Système de génération d'impulsions lumineuses ultrabrèves selon l'une des revendications 1 à 2 dans lequel le filtre spectral (8) comprend un filtre à base de prisme, un filtre à base de réseau de diffraction, un filtre interférentiel, un filtre biréfringent, un filtre diffractif à miroir de Bragg, un filtre diffractif à miroir résonnant, un filtre acousto-optique ou un filtre acousto-optique en couches minces.

4. Système de génération d'impulsions lumineuses ultrabrèves selon la revendication 3 dans lequel le filtre spectral (8) est un filtre interférentiel ou un filtre acousto-optique configuré pour filtrer simultanément une pluralité de bandes passantes spectrales espacées spectralement les unes des autres, chaque bande passante spectrale étant définie par une longueur d'onde centrale et une largeur spectrale comprise entre 10 pm et 10 nm, et chaque longueur d'onde centrale du filtre spectral (8) étant accordable dans une gamme spectrale comprise à l'intérieur de la bande spectrale d'émission de la source lumineuse (9, 99).

5. Système de génération d'impulsions lumineuses ultrabrèves selon la revendication 3 ou 4 dans lequel le filtre spectral (8) a une largeur spectrale inférieure à 1 nm.

6. Système de génération d'impulsions lumineuses ultrabrèves selon l'une des revendications 1 à 5 dans lequel ledit au moins un amplificateur optique comprend une pluralité d'amplificateurs optiques (31, 32, 33, 34) disposés en étoile et/ou un préamplificateur à fibre optique (20, 21, 22) et un amplificateur à fibre optique de puissance (30) disposés en série.

7. Système de génération d'impulsions lumineuses ultrabrèves selon l'une des revendications 1 à 6 dans lequel la source lumineuse (9, 99), le filtre spectral (8) et/ou ledit au moins un amplificateur optique (20, 30) comprennent des composants à fibre optique.

8. Système de génération d'impulsions lumineuses ultrabrèves selon l'une des revendications 1 à 7 dans lequel ledit au moins un amplificateur optique (20, 30) comprend une fibre optique dopée terre rare.

9. Système de génération d'impulsions lumineuses ultrabrèves selon l'une des revendications 1 à 8 comprenant en outre :
- un composant optique dispersif (40) à dispersion négative disposé en sortie dudit au moins un amplificateur optique (20, 30), le composant optique dispersif (40) étant adapté pour recevoir simultanément une impulsion pompe et une impulsion amplifiée ultrabrève (120, 130) et pour générer, par effet optique non-linéaire de mélange à quatre ondes, un premier signal optique et un second signal optique, le premier ou le second signal optique comprenant une impulsion lumineuse de sortie (140, 141) de durée de l'ordre de la picoseconde à la centaine de picosecondes et à une longueur d'onde prédéterminée dans le domaine ultraviolet, visible ou infrarouge et ayant une largeur spectrale inférieure à 10 nm, la longueur d'onde prédéterminée de l'impulsion lumineuse de sortie (140, 141) étant accordable en fonction de la longueur d'onde centrale du filtre spectral (8).

10. Système de génération d'impulsions lumineuses ultrabrèves selon la revendication 9 dans lequel le composant optique dispersif (40) comprend une section de fibre optique photonique.

11. Procédé de génération d'impulsions lumineuses ultrabrèves accordables en longueur d'onde dans un domaine spectral compris entre l'ultraviolet et l'infrarouge comprenant les étapes suivantes :
- Génération, au moyen d'une source lumineuse (99), d'impulsions lumineuses brèves (100) de durée comprise entre plusieurs centaines de picosecondes et une centaine de nanosecondes, lesdites impulsions lumineuses brèves (100) s'étendant sur une bande spectrale d'émission ayant une largeur spectrale de plusieurs dizaines de nanomètres à plusieurs centaines de nanomètres ;
- filtrage spectral, au moyen d'un filtre spectral (8) accordable en longueur d'onde et disposé sur le trajet optique d'un miroir à boucle non linéaire amplificateur (99), desdites impulsions brèves (100) dans au moins une bande passante spectrale définie par une longueur d'onde centrale et une largeur spectrale comprise entre 10 pm et 10 nm, la longueur d'onde centrale de ladite bande passante spectrale étant accordable à l'intérieur d'une gamme spectrale comprise à l'intérieur de ladite bande spectrale d'émission, le filtrage spectral étant adapté pour filtrer spectralement et pour mettre en forme temporellement lesdites impulsions lumineuses brèves (100), de manière à générer des impulsions lumineuses ultrabrèves (110) de durée de l'ordre de la picoseconde, filtrées spectralement et accordables en longueur d'onde en fonction de la longueur d'onde centrale de ladite bande passante spectrale, et
- première amplification optique desdites impulsions ultrabrèves (110) filtrées spectralement au moyen d'un amplificateur optique disposé sur le trajet optique dudit miroir à boucle non linéaire amplificateur (99), pour générer des impulsions amplifiées ultrabrèves (120, 130) filtrées spectralement et accordables en longueur d'onde en fonction de la longueur d'onde centrale de ladite bande passante spectrale du filtrage spectral, et
- une autre amplification optique au moyen d'au moins un autre amplificateur optique (20,21,22,30,31,32,33,34) disposé sur un trajet optique en sortie du miroir à boucle non linéaire amplificateur (99).

12. Procédé de génération d'impulsions lumineuses ultrabrèves accordables en longueur d'onde selon la revendication 11 comprenant en outre l'étape suivante :
- génération, à partir d'une impulsion pompe et d'une impulsion amplifiée ultrabrève (120, 130), par effet optique non-linéaire de mélange à quatre ondes dans un composant optique dispersif (40) à dispersion négative disposé en sortie dudit au moins un autre amplificateur optique, d'un premier signal optique et d'un second signal optique, le premier ou le second signal optique comprenant une impulsion lumineuse ultrabrève de sortie (140, 141), de durée de l'ordre de la picoseconde à la centaine de picosecondes et à une longueur d'onde prédéterminée dans le domaine ultraviolet, visible ou infrarouge avec une largeur spectrale inférieure à 10 nm, la longueur d'onde prédéterminée de l'impulsion lumineuse ultrabrève de sortie (140, 141) étant accordable en fonction de la longueur d'onde centrale de ladite bande passante spectrale du filtrage spectral.

## Patentansprüche

1. System zur Erzeugung wellenlängenabstimmbarer, ultrakurzer Lichtimpulse in einem Spektralbereich zwischen Ultraviolett und Infrarot, **dadurch gekennzeichnet, daß** das System folgendes aufweist:
- ein Einkopplungsmodul (10) mit einer Lichtquelle (9, 99) und einem wellenlängenabstimmbaren Spektralfilter (8),
- wobei die Lichtquelle (9, 99) dazu ausgelegt ist, kurze Lichtimpulse (100) mit einer Dauer zwischen mehreren Hundert Pikosekunden und etwa Hundert Nanosekunden zu erzeugen, wobei sich die kurzen Lichtimpulse (100) über ein spektrales Ausstrahlungsband mit einer spektralen Breite von mehreren Zehnereinheiten von Nanometern bis mehrere Hundert Nanometer erstrecken,
- wobei der Spektralfilter (8) wenigstens ein durch eine zentrale Wellenlänge und eine spektrale Breite zwischen 10 pm und 10 nm definiertes spektrales Durchlaßband aufweist und die zentrale Wellenlänge des spektralen Durchlaßbands in einem im spektralen Ausstrahlungsband der Lichtquelle (9, 99) liegenden spektralen Bereich abstimmbar ist, wobei der Spektralfilter (8) dazu ausgelegt ist, die kurzen Lichtimpulse (100) spektral zu filtern und in ein Zeitformat zu bringen, damit das Einkopplungsmodul (10) spektral gefilterte und in Abhängigkeit von der zentralen Wellenlänge des spektralen Durchlaßbands wellenlängenabstimmbare ultrakurze Lichtimpulse (110) mit einer Dauer in der Größenordnung einer Pikosekunde erzeugt; und
- wenigstens einen am Ausgang des Einkopplungsmoduls (10) angeordneten optischen Verstärker (20, 21, 22, 30, 31, 32, 33, 34), wobei der wenigstens eine optische Verstärker dazu ausgelegt ist, die spektral gefilterten und wellenlängenabstimmbaren ultrakurzen Lichtimpulse (110) zu empfangen und durch optische Verstärkung spektral gefilterte und in Abhängigkeit von der zentralen Wellenlänge des spektralen Durchlaßbands des Spektralfilters (8) wellenlängenabstimmbare ultrakurze verstärkte Impulse (120, 130) zu erzeugen,
- wobei die Lichtquelle (9, 99) einen Verstärkerspiegel mit nichtlinearer Schleife (99) aufweist, wobei der Verstärkerspiegel mit nichtlinearer Schleife (99) einen auf der optischen Strecke des Spiegels mit nichtlinearer Schleife angeordneten weiteren optischen Verstärker (1) aufweist und der Spektralfilter (8) auf der Strecke des Spiegels mit nichtlinearer Schleife (99) angeordnet ist.

2. System zur Erzeugung ultrakurzer Lichtimpulse gemäß Anspruch 1, bei dem der Verstärkerspiegel mit nicht linearer Schleife (99) die Form einer Acht aufweist und eine erste bidirektionale nichtlineare Verstärkerschleife (11) und eine zweite unidirektionale nichtlineare Schleife (12) aufweist, wobei der Spektralfilter (8) in der ersten nichtlinearen Schleife (11) angeordnet ist.

3. System zur Erzeugung ultrakurzer Lichtimpulse gemäß einem der Ansprüche 1 bis 2, bei dem der Spektralfilter (8) einen Filter auf der Basis eines Prismas, einen Filter auf der Basis eines Beugungsgitters, einen Interferenzfilter, einen doppelbrechenden Filter, einen Beugungsfilter mit Bragg-Spiegel, einen Beugungsfilter mit Resonanzspiegel, einen akusto-optischen Filter oder einen akusto-optischen Dünnschichtfilter aufweist.

4. System zur Erzeugung ultrakurzer Lichtimpulse gemäß Anspruch 3, bei dem der Spektralfilter (8) ein Interferenzfilter oder ein akusto-optischer Filter ist, der dazu ausgelegt ist, eine Anzahl von spektral voneinander beabstandeten spektralen Duchlaßbändern gleichzeitig zu filtern, wobei jedes spektrale Durchlaßband durch eine zentrale Wellenlänge und eine spektrale Breite zwischen 10 pm und 10 nm definiert ist und wobei jede zentrale Wellenlänge des Spektralfilters (8) in einem innerhalb des spektralen Ausstrahlungsbands der Lichtquelle (9, 99) liegenden Spektralbereich abstimmbar ist.

5. System zur Erzeugung ultrakurzer Lichtimpulse gemäß Anspruch 3 oder 4, bei dem der Spektralfilter (8) eine spektrale Breite von weniger als 1 nm aufweist.

6. System zur Erzeugung ultrakurzer Lichtimpulse gemäß einem der Ansprüche 1 bis 5, bei dem der wenigstens eine optische Verstärker eine Anzahl von sternförmig angeordneten optischen Verstärkern (31, 32, 33, 34) und/oder einen mit einem Glasfaserleistungsverstärker (30) in Reihe angeordneten Glasfaservorverstärker (20, 21, 22) aufweist.

7. System zur Erzeugung ultrakurzer Lichtimpulse gemäß einem der Ansprüche 1 bis 6, bei dem die Lichtquelle (9, 99), der Spektralfilter (8) und/oder der wenigstens eine optische Verstärker (20, 30) Glasfaserbauelemente aufweisen.

8. System zur Erzeugung ultrakurzer Lichtimpulse gemäß einem der Ansprüche 1 bis 7, bei dem der wenigstens eine optische Verstärker (20, 30) eine mit Seltenerdmaterial dotierte Glasfaser aufweist.

9. System zur Erzeugung ultrakurzer Lichtimpulse gemäß einem der Ansprüche 1 bis 8, das außerdem
ein am Ausgang des wenigstens einen optischen Verstärkers (20, 30) angeordnetes optisches Streuelement (40) mit negativer Streuung aufweist,
wobei das optische Streuelement (40) dazu ausgelegt ist, einen Pumpimpuls und einen ultrakurzen verstärkten Impuls (120, 130) gleichzeitig zu empfangen und durch einen nichtlinearen optischen Effekt einer Vierwellenmischung ein erstes optisches Signal und ein zweites optisches Signal zu erzeugen, wobei das erste optische Signal oder das zweite optische Signal einen Ausgangslichtimpuls (140, 141) mit einer Dauer in der Größenordnung von einer Pikosekunde bis etwa 100 Pikosekunden und mit einer vorbestimmten Wellenlänge im Bereich des Ultraviolett, des sichtbaren Lichts oder des Infrarot und mit einer spektralen Breite von weniger als 10 nm aufweist, wobei die vorbestimmte Wellenlänge des Ausgangslichtimpulses (140, 141) in Abhängigkeit von der zentralen Wellenlänge des Spektralfilters (8) abstimmbar ist.

10. System zur Erzeugung ultrakurzer Lichtimpulse gemäß Anspruch 9, bei dem das optische Streuelement (40) einen Abschnitt mit photonischer optischer Faser aufweist.

11. Verfahren zur Erzeugung wellenlängenabstimmbarer, ultrakurzer Lichtimpulse in einem Spektralbereich zwischen Ultraviolett und Infrarot mit den folgenden Schritten:
- Erzeugen von kurzen Lichtimpulsen (100) mit einer Dauer zwischen mehreren Hundert Pikosekunden und etwa Hundert Nanosekunden mittels einer Lichtquelle (99), wobei sich die kurzen Lichtimpulse (100) über ein spektrales Ausstrahlungsband mit einer spektralen Breite von mehreren Zehnereinheiten von Nanometern bis mehrere Hundert Nanometer erstrecken,
- spektrales Filtern der kurzen Impulse (100) in wenigstens einem durch eine zentrale Wellenlänge und eine spektrale Breite zwischen 10 pm und 10 nm definierten spektralen Durchlaßband mittels eines wellenlängenabstimmbaren und auf der optischen Strecke eines Verstärkerspiegels mit nicht linearer Schleife (99) angeordneten Spektralfilters (8), wobei die zentrale Wellenlänge des spektralen Durchlaßbands innerhalb eines innerhalb des spektralen Ausstrahlungsbands liegenden Spektralbereichs abstimmbar ist, wobei das spektrale Filtern dazu ausgelegt ist, die kurzen Lichtimpulse (100) spektral zu filtern und zeitmäßig in eine Form zu bringen, um spektral gefilterte und in Abhängigkeit von der zentralen Wellenlänge des spektralen Durchlaßbands wellenlängenabstimmbare ultrakurze Lichtimpulse (110) von einer Dauer in der Größenordnung der Pikosekunde zu erzeugen, und
- eine erste optische Verstärkung der spektral gefilterten ultrakurzen Impulse (110) mittels eines auf der optischen Strecke eines Verstärkerspiegels mit nicht linearer Schleife (99) angeordneten optischen Verstärkers, um spektral gefilterte und in Abhängigkeit von der zentralen Wellenlänge des spektralen Durchlaßbands des Spektralfilters wellenlängenabstimmbare, verstärkte ultrakurze Lichtimpulse (120, 130) zu erzeugen, und
- eine weitere optische Verstärkung mittels wenigstens eines weiteren, auf einer optischen Strecke am Ausgang des Verstärkerspiegels mit nicht linearer Schleife (99) angeordneten optischen Verstärkers (20, 21, 22, 30, 31, 32, 33, 34).

12. System zur Erzeugung wellenlängenabstimmbarer, ultrakurzer Lichtimpulse gemäß Anspruch 11, das außerdem folgenden Schritt aufweist:
Erzeugen eines ersten optischen Signals und eines zweiten optischen Signals aus einem Pumpimpuls und einem verstärkten ultrakurzen Impuls (120, 130) durch einen nichtlinearen optischen Effekt mit Vierwellenmischung in einem am Ausgang des wenigstens einen weiteren optischen Verstärkers angeordneten optischen Streuelement (40) mit negativer Streuung, wobei das erste und das zweite optische Signal einen ultrakurzen Ausgangslichtimpuls (140, 141) mit einer Dauer in der Größenordnung von einer Pikosekunde bis etwa 100 Pikosekunden und mit einer vorbestimmten Wellenlänge im Bereich des Ultraviolett, des sichtbaren Lichts oder des Infrarot und mit einer spektralen Breite von weniger als 10 nm aufweisen, wobei die vorbestimmte Wellenlänge des ultrakurzen Ausgangslichtimpulses (140, 141) in Abhängigkeit von der zentralen Wellenlänge des Spektralfilters (8) abstimmbar ist.

## Claims

1. A system for generating ultra-short light pulses that are wavelength-tunable in a spectral domain comprised between the ultraviolet and the infrared, **characterized in that** said system comprises:
- an injection module (10) comprising a light source (9, 99) and a wavelength-tunable spectral filter (8),
- the light source (9, 99) being adapted to generate short light pulses (100), of a duration comprised between several hundreds of picoseconds and a hundred of nanoseconds, said short light pulses (100) extending over a spectral band of emission having a spectral width of several tens of nanometres to several hundreds of nanometres,
- the spectral filter (8) having at least one spectral bandwidth defined by a central wavelength and a spectral width comprised between 10 pm and 10 nm, and the central wavelength of said spectral bandwidth being tunable in a spectral range comprised in the spectral band of emission of the light source (9, 99), the spectral filter (8) being adapted to spectrally filter and to temporally shape said short light pulses (100), so that the injection module (10) generates ultra-short light pulses (110), of a duration of the order of a picosecond, spectrally filtered and wavelength-tunable as a function of the central wavelength of said spectral bandwidth; and
- at least one optical amplifier (20, 21, 22, 30, 31, 32, 33, 34) arranged at the exit of the injection module (10), said at least one optical amplifier being adapted to receive said spectrally filtered and wavelength-tunable ultra-short light pulses (110) and to generate by optical amplification ultra-short amplified pulses (120, 130), spectrally filtered and wavelength-tunable as a function of the central wavelength of said spectral bandwidth of the spectral filter (8),
- the light source (9, 99) comprising a non-tinear amplifying loop mirror (99), the non-linear amplifying loop mirror (19) comprising another optical amplifier (1) arranged on the optical path of the non-linear loop mirror and the spectral filter (8) being arranged on the optical path of the non-linear loop mirror (99).

2. The system for generating ultra-short light pulses according to claim 1, wherein the non-linear amplifying loop mirror (99) is 8-shaped and comprises a first, bidirectional non-linear amplifying loop (11) and a second, unidirectional non-linear loop (12), the spectral filter (8) being arranged in the first non-linear loop (11).

3. The system for generating ultra-short light pulses according to one of claims 1 to 2, wherein the spectral filter (8) comprises a prism-based filter, a diffraction grating-based filter, an interferential filter, a birefringent filter, un Bragg mirror diffractive filter, a resonating mirror diffractive filter, an acousto-optic filter or a thin-layer acousto-optic filter.

4. The system for generating ultra-short light pulses according to claim 3, wherein the spectral filter (8) is an interferential filter or an acousto-optic filter configured to filter simultaneously a plurality of spectral bandwidths spectrally spaced apart from each other, each spectral bandwidth being defined by a central wavelength and a spectral width comprised between 10 pm and 10 nm, and each central wavelength of the spectral filter (8) being tunable in a spectral range comprised in the spectral band of emission of the light source (9, 99).

5. The system for generating ultra-short light pulses according to claim 3 or 4, wherein the spectral filter (8) has a spectral width lower than 1 nm.

6. The system for generating ultra-short light pulses according to one of claims 1 to 5, wherein said at least one optical amplifier comprises a plurality of optical amplifiers (31, 32, 33, 34) arranged as a star and/or an optical fibre pre-amplifier (20, 21, 22) and a power optical fibre amplifier (30) arranged in series.

7. The system for generating ultra-short light pulses according to one of claims 1 to 6, wherein the light source (9, 99), the spectral filter (8) and/or the at least one optical amplifier (20, 30) comprise optical fibre components.

8. The system for generating ultra-short light pulses according to one of claims 1 to 7, wherein said at least one optical amplifier (20, 30) comprises a rare earth-doped optical fibre.

9. The system for generating ultra-short light pulses according to one of claims 1 to 8, further comprising:
- a dispersive optical component (40) of negative dispersion arranged at the exit of said at least one optical amplifier (20, 30), the dispersive optical component (40) being adapted to receive simultaneously a pump pulse and an ultra-short amplified pulse (120, 130) and to generate, by non-linear optical effect of four-wave mixing, a first optical signal and a second optical signal, the first or the second optical signal comprising an exit light pulse (140, 141) of a duration of the order of a picosecond to a hundred of picoseconds, and at a predetermined wavelength in the ultraviolet, visible or infrared domain, and having a spectral width lower than 10 nm, the predetermined wavelength of the exit light pulse (140, 141) being tunable as a function of the central wavelength of the spectral filter (8).

10. The system for generating ultra-short light pulses according to claim 9, wherein the dispersive optical component (40) comprises a section of photonic optical fibre,

11. A method for generating wavelength-tunable ultra-short light pulses in a spectral domain comprised between the ultraviolet and the infrared comprising the following steps:
- Generating, by means of a light source (99), short light pulses (100), of a duration comprised between several hundreds of picoseconds and a hundred of nanoseconds, said short light pulses (100) extending over a spectral band of emission having a spectral width of several tens of nanometres to several hundreds of nanometres;
- spectrally filtering, by means of a wavelength-tunable spectral filter (8) arranged on the optical path of a non-linear amplifying loop mirror (99), said short pulses (100) in at least a spectral bandwidth defined by a central wavelength and a spectral width comprised between 10 pm and 10 nm, the central wavelength of said spectral bandwidth of the spectral filtering being tunable in a spectral range comprised in said spectral band of emission, the spectral filtering being adapted to spectrally filter and to temporally shape said short light pulses (100), so as to generate ultra-short light pulses (110) of a duration of the order of a picosecond, spectrally filtered and wavelength-tunable as a function the central wavelength of said spectral bandwidth, and
- first optical amplification of said spectrally filtered ultra-short pulses (110) by means of an optical amplifier arranged on the optical path of the non-linear amplifying loop mirror (99), to generate ultra-short amplified pulses (120, 130) that are spectrally filtered and wavelength-tunable as a function of the central wavelength of said spectral bandwidth of the spectral filter, and
- another optical amplification by means of at least another optical amplifier (20, 21, 22, 30, 31, 32, 33, 34) arranged on an optical path at the exit of the non-linear amplifying loop mirror (99).

12. A method for generating wavelength-tunable ultra-short light pulses according to claim 11, further comprising the following step:
- generating, from a pump pulse and an ultra-short amplified pulse (120, 130), by non-linear optical effect of four-wave mixing in a dispersive optical component (40) of negative dispersion arranged at the exit of said at least another optical amplifier, a first optical signal and a second optical signal, the first or the second optical signal comprising an exit ultra-short light pulse (140, 141), of a duration of the order of a picosecond to a hundred of picoseconds and at a predetermined wavelength in the ultraviolet, visible or infrared domain, with a spectral width lower than 10 nm, the predetermined wavelength of the exit ultra-short light pulse (140, 141) being tunable as a function of the central wavelength of said spectral bandwidth of the spectral filter.
